# EUROPEAN PATENT SPECIFICATION

(11) **EP 0 457 568 B1**
(45) Date of publication and mention of the grant of the patent: **02.11.1994**
(21) Application number: 91304358.4
(22) Date of filing: 15.05.1991
(51) Int. Cl.: B29C 61/00, B32B 27/32, C08L 23/10, C08L 23/20

(54) **Polypropylene-polybutylene compositions**
Polypropen-Polybuten-Zusammensetzungen
Compositions de polypropylène et polybutène

(30) Priority: 17.05.1990 US 524624; 25.02.1991 US 659814
(43) Date of publication of application: 21.11.1991
(73) Proprietor: SHELL OIL COMPANY, Houston Texas 77002 (US)
(72) Inventor: Hwo, Charles C., Sugar Land, Texas 77478 (US)
(74) Representative: Cresswell, Thomas Anthony

(56) References cited:
- EP-A- 0 218 332
- CA-A- 775 184
- DE-A- 1 694 622
- US-A- 3 849 520

## Description

The present invention relates to a composition comprising a propylene polymer, a butylene polymer with a low melt index and a butylene polymer with a high melt index which can be used to provide, for example, films which are heat shrinkable and have good clarity and good processability.

Thermoplastic films can be used as packaging material, for example to shrink wrap articles. Shrink film is used in many applications, for example to wrap articles such as toys, sporting goods, stationary, greeting cards, hardware, household products, office supplies and forms, phonograph records, industrial parts, computer floppy diskettes and photo albums. Heat is applied to the shrink film e.g. by exposing it to a blast of heated air or by immersing it in boiling water, so that the film shrinks to conform to the shape of the article to be packaged therein. Examples of shrink films are films fabricated from polyolefins or irradiated polyolefins.

For most shrink film applications, a film should exhibit a high shrink energy or contractile force when heated to elevated temperatures. In addition, the film should not only be heat shrinkable but have good clarity and be easily processed.

A shrink film should possess the following specific properties, which may depend upon the articles to be wrapped or encased;
(1) a shrink force between 100 and 400 grams per 2.54 cm (inch) of width at 100°C;
(2) a percent shrinkage between 10 and 50% at 121°C;
(3) a high clarity;
(4) a modulus between 414 and 2413 MPa (60,000 and 350,000 psi);
(5) machinability: the coefficient of friction should be less than 0.5;
(6) tear strength: the tear strength should be as high as possible; typical is 3 to 15 grams per 25.4 µm (mil) of film thickness and per 2.54 cm (inch) of width; and
(7) elongation: the elongation should be between 50 and 150%.

Films may be oriented or unoriented. Oriented films may be obtained by stretching processes in which tensions capable of stretching the film are applied to the film, the directions of which form an angle of about 90°, utilizing well known prior art techniques. These film stretching tensions may be applied sequentially, for example by stretching a film, after forming, in a longitudinal direction and thereafter applying tension in a transverse direction to stretch the film transversely, or simultaneously, by applying longitudinal and transverse tensions to the film at the same time resulting in a simultaneous longitudinal and transverse stretching of the film.

US-A-3,900,534 discloses a biaxially oriented thermoplastic film structure formed from a blend comprising polypropylene and polybutene homopolymers where the polybutene is present in a small amount of more than 10% but less than 20% by weight.

US-A-3,634,553 discloses a heat shrinkable oriented thermoplastic film which comprises a blend of polypropylene and an ethylene/butene-1 copolymer.

EP-A-145,014 discloses a blend of a random copolymer of propylene and an alpha olefin with 4 or more carbon atoms (i.e. perhaps butene-1), where the alpha olefin content in the copolymer is 8 to 30 mole% (m%).

Single layer shrink films based on blends of polybutylene with polypropylene are disclosed in US-A-3,634,552 (1972), US-A-3,634,553 (1972), US-A-3,849,520 (1974) and US-A-3,900,534 (1975) and blends of polybutylene with ethylene vinyl acetate (EVA) and C₂-C_{α} elastomer or polybutylene with low density polyethylene (LDPE) and C₂-C_{α} elastomer (where C_{α} is an α-olefin comonomer) are disclosed in US-A-4,379,888 (1983). Multilayer films may include three layers (propylene-ethylene plus butene-1-ethylene plus ethylene-propylene rubber)/tie layer/linear low density polyethylene (LLDPE) as in US-A-4,196,240 (1980) for frozen poultry and US-A-4,207,363 (1980) for primal meat cuts. Three layer film of propylene-ethylene/(EVA + butene-1-ethylene)/propylene/ethylene is disclosed in US-A-4,194,039 (1980). Also three layer films of polypropylene + polybutylene)/EVA/irradiated EVA for turkey bags are known from US-A-3,754,063 (1973), US-A-3,932,274 (1974) and US-A-3,891,008 (1975).

Polyvinyl chloride (PVC) has been used to produce good shrink films. PVC has been shown to be better in certain applications than polyolefins such as propylene polymers. The use of polyolefins in shrink wrap results in a moderate to high shrink force which is undesirable in many applications. However, the use of polyolefins allows the use of high speed automated packaging machinery with lower cost, and less corrosion of equipment. PVC may produce a better looking package because of the low shrink force and better optics. Also, the seal and shrink of PVC films may take place over a much broader temperature range and tear strength may be better.

There has been a need for a blend of heat shrinkable thermoplastic film with the film advantages of PVC but which is of low cost, can be used on a high speed automated packaging machine and which does not corrode equipment.

An improvement in processing characteristics in the fabrication of plastics products has long been demanded for economic reasons. Optical and shrink properties are considered to be as critical as the processing characteristics especially in the shrink film packaging industry. Frequently, additives used to improve processability have detrimental effects on physical and optical properties of the products. It has been found that properties of propylene polymer/polybutylene blends can be improved and processing difficulty can be alleviated by adding a small amount (not more than 10 w%) of high melt flow or low molecular weight polybutylene as a third component to the blends.

According to the invention there is provided a composition comprising a blend of (i) at least 40 percent by weight of a propylene polymer, (ii) at least 40 percent by weight of a low melt index polybutene-1 having a melt index (as determined in accordance with ASTM D-1238 Condition E at 190°C) of between 0.5 and 10 g/10 minutes and (iii) 2 to 8, especially 4 to 6, percent by weight of a high melt index polybutene-1 having a melt index (as determined in accordance with ASTM D-1238 Condition E at 190°C) of from 20 to 350, preferably 20 to 300, especially 100 to 200, g/10 minutes and a melt viscosity of greater than 20 Pas (20,000 centipoise) at 200°C.

This composition can be formed into a packaging film, sheet or laminar structure which is shrinkable and has good clarity and good processability. Film prepared from the composition of the present invention exhibits low shrink force (which is adjustable by the blending ratio), low shrink temperature, low stiffness, good optics, low corrosion and low cost, and can be used on high speed automated packaging machines. The composition may reduce the scraps generated in a stretching operation during the fabrication of biaxially oriented, low shrink force, shrink films.

The high melt index poly-1-butene suitably is a butene-1 polymer containing at least 90%, preferably at least 95%, and more preferably about 97%, by weight of isotactic portions. Isotactic poly-1-butenes having a low molecular weight, e.g. less than about 280,000, as determined by solution viscosity in "Decalin" (decahydronophthalene) are suitable for use. Usable poly-1-butenes have a density of 0.900-0.925, preferably 0.905-0.920 and especially 0.910-0.915, g/cm³. Usable poly-1-butenes have melt indices of from 20 to 350, more preferably 20 to 300, and most preferably 100 to 200, g/10 minutes as determined by ASTM D-1238 Condition E, at 190°C. The intrinsic viscosity of the polybutylene may be from 0.03 to 0.20, preferably from 0.06 to 0.11, at 130°C. The Brookfield melt viscosity is greater than 20 Pas (20,000 CPS) at 200°C, preferably greater than 25 Pas (25,000 CPS) at 200°C, most preferably greater than 35 Pas (35,000 PCS) at 200°C.

The low melt index poly-butene-1 suitably is a butene-1 polymer containing at least 95%, preferably 97%, and most preferably 98%, by weight of isotactic portions. Suitable polybutenes have a density of 0.914-0.919 g/cm³ and a melt index of less than 20 g/10 min. at 190°C.

The polybutenes (PB) usable herein are either butene-1 homopolymers or copolymers. If butene-1 copolymers are used, the non-butene comonomer content is preferably 1-30 mole% of ethylene, propylene, or an alpha olefin having from 5 to 8 carbon atoms.

Suitable poly-1-butenes can be obtained, for example, in accordance with Ziegler-Natta low-pressure polymerization of butene-1, e.g. by polymerizing butene-1 with catalysts of TiC1₃ or TiC1₃.A1C1₃ and A1(C₂H₅)₂C1 at temperatures of 10-50°C, preferably 20-40°C, e.g. according to the process of DE-A-1,570,353. High melt indices can then be obtained by further processing the polymer by peroxide cracking. The polybutylene may be modified to increase surface activity by reaction with, for example, maleic anhydride or other functional group.

"Duraflex" (Registered Trade Mark) PB8240 is a particularly suitable low melt index polybutylene having a melt index of 2.0 g/10 min, at 190°C for use and is available from Shell Chemical Company, Houston, Texas, U.S.A.

"Duraflex" DP0800, a developmental poly-1-butene produced by Shell Chemical Company is a particularly suitable high melt index butene-1 polymer for use. This is a homopolymer with a melt index of 200 g/10 min at 190°C and a molecular weight of 108,000.

"Duraflex" PB0400, a commercially available poly-1-butene produced by Shell Chemical Company, is another high melt index polymer suitable for use in this invention. This is a homopolymer with a melt index of 20 g/10 min. at 190°C and 45 g/10 min. at 210°C and a molecular weight of 202,000.

The propylene polymer used in the present invention can be any crystallizable polymer. Such a polymer can be prepared by homopolymerizing propylene irrespective of the method used so long as crystallizable polypropylene is formed. Preferred polypropylenes are the substantially isotactic polypropylenes prepared by the Ziegler/Natta or MgC1₂-supported catalyst polymerization process.

The propylene polymers usable herein can be propylene homopolymers or copolymers. If propylene copolymers are used, they can be random or block copolymers with the comonomer content preferably 1 to 30 mole % of ethylene or an alpha olefin having from 4 to 8 carbon atoms.

Propylene polymers useful in the invention preferably have a melt index of less than 60, more preferably from 1 to 15, as measured by ASTM D-1238, Condition L at 230°C. A particularly suitable propylene has a melt index of 3.2 and is available from Shell Chemical Company as PP5CO8.

A preferred composition contains 5% by weight of a high melt index butene-1 homopolymer having a melt index of about 200 g/10 min., 47.5% by weight of a propylene homopolymer having a melt index of about 3.2 and 47.5% by weight of a low melt index butene-1 homopolymer having a melt index of less than 10.

The blends may also contain additives and fillers, e.g. mold release agents, UV or thermal stabilizers, slip agents, antiblock agents, nucleating agents, pigments, antioxidants or flame retardants.

Blending of the components can occur by one of several methods, for example dry tumble blending, masterbatch or melt compounding techniques. In most cases it is desirable to use the least amount of energy to merge the components into an effective blend. Therefore, the preferred method of blending is dry blending the components in a powder form.

The components of the composition of the present invention are blended together to form a substantially homogeneous resin mixture. This may be accomplished, for example, by tumbling the mixture in a fiber drum. The tumble mixture is then melt compounded by an extruder having good mixing and pelletized thereafter. The blend is then extruded into a film utilizing a standard extruder and tubular or flat film die and is subsequent oriented utilizing any one of a number of prior art film orientation techniques.

Various thicknesses of shrink film may be manufactured through utilizing a novel resin composition of the present invention. The thickness may be from 2.5 to 130 µm (0.10 to 5 mils) and preferably from 13 to 51 µm (0.5 to 2 mils).

The following Example will help to illustrate the present invention.

### EXAMPLE

Blends were prepared from, as propylene polymers, WRS6151 PP, a random copolymer of propylene with 1% by weight ethylene which is a developmental polymer and PP5CO8, a polypropylene homopolymer having a melt index of 3.2 g/10 min at 190°C, both available from Shell Chemical Co., and, as polybutylenes, "Duraflex" PB8240 a low melt index polybutylene, "Duraflex" DPO800 a high melt index polybutylene and "Duraflex" PB0400 a high melt index polybutylene.

The typical physical properties of the high melt index polybutylene DP0800 are listed below:

**TABLE I**

| Typical Physical Properties of DP0800 Polybutylene | | | | | |
|---|---|---|---|---|---|
| | | ASTM Test Method | Unit | | Polybutylene DP0800 |
| | | | English | (Metric) | |
| Melt Index | @ 190°C | D1238 "E" | - | g/10 min | 200 |
| | @ 210°C | D1238 "L" | - | g/10 min | 490 |
| Density | | D1505 | 1b/ft | g/cm³ | 57.1(0.915) |
| Tensile strength @ yield | | D638 | psi | MPa | 2000(13.8) |
| Tensile strength @ break | | D638 | psi | MPa | 4200(29.0) |
| Elongation at break | | D638 | % | % | 350 |
| Modulus of elasticity | | D638 | psi | MPa | 35000(241) |
| Hardness, Shore | | D2240 | D scale | D scale | 55(55) |
| Brittleness temperature | | D746 | °F | °C | 0°(-18°) |
| Melting point range | | DSC | °F | °C | 255-259° (124-126°) |
| Soft point, Vicat | | D1525 | °F | °C | 241°(116°) |
| Thermal conductivity, at 77°F (25°C) | | C177 | Btu/ft²/ hr/°F/in | Kcal/m² hr/°C/cm | 1.25 (16) |

Formulations 1-6 were prepared in the weight proportions given in Table II for testing. Formulation 6 is in accordance with the invention, the rest are controls.

**TABLE II**

| Formulation | WRS6151 PP | PP5C08 | PB8240 | DP0800 | PB0400 |
|---|---|---|---|---|---|
| 1 | 100 | | | | |
| 2 | 95 | | | 5 | |
| 3 | | 100 | | | |
| 4 | | 95 | | | 5 |
| 5 | | 50 | 50 | | |
| 6 (invention) | | 47.5 | 47.5 | 5 | |

The formulations were prepared by dry tumbling the ingredients for about 1 hour in a drum at room temperature. The dry tumbled blend was placed in a 3.2 cm (1¼ inch) single stage single screw Brabender extruder, with the screw equipped with a mixing head. The compounding was run at a temperature between 215° and 232°C (420° and 450°F) and the mixture was given a residence time of about 5 minutes in the extruder. The mixture was extruded into a strand, cooled and chopped into pellets using conventional techniques. Sheets were then prepared by the casting process using a sheet processing line using a Killion extruder. Sheets were prepared 508 µm (20 mils) thick.

The sheets were tested on a biaxial stretcher in some cases on an Iwamoto Film Stretcher, and in other cases on a T.M. Long Stretcher. Sheet samples were drawn using the conditions given in Table III below. The stretching conditions on the sheet were, Draw Speed - 30 mm/sec, preheat time - 3 minutes, and grip force - 0.86 to 1.03 MPa (125-150 psi).

**TABLE III**

| Stretching Conditions | | | | | |
|---|---|---|---|---|---|
| SAMPLE | THICKNESS µm (MILS) | | DWELL (SEC) | TEMP °C (DEG F) | DRAW RATIO |
| | BEFORE | AFTER | | | |
| 1 | 533 (21) | 25.4 (1.0) | 60 | 124 (255) | 4.5:1 |
| 2 | 533 (21) | 30.5 (1.2) | 60 | 118 (245) | 4.5:1 |
| 3 | 178 ( 7) | 20.3 (0.8) | 45 | 148 (298) | 3:1 |
| 4 | 178 ( 7) | 20.3 (0.8) | 45 | 143 (290) | 3:1 |
| 5 | 178 ( 7) | 25.4 (1.0) | 30 | 121 (250) | 3:1 |
| 6 | 178 ( 7) | 25.4 (1.0) | 30 | 116 (240) | 3:1 |

Table IV shows the results of the stretching of the formulations of the T.M. Long Stretcher.

**TABLE IV**

| Optical Properties of Films | | | |
|---|---|---|---|
| SAMPLE | HAZE | CLARITY | GLOSS |
| 1 | 1.9 | 64 | 118 |
| 2 | 1.9 | 70* | 111 |
| 3 | 10.9 | 11.9 | 56.2 |
| 4 | 14.8 | 3.4 | 78.8* |
| 5 | 12.4 | 15 | 52.8 |
| 6 | 16.5 | 18.8* | 52.7 |

| | | | |
|---|---|---|---|
| * Improved | | | |

As can be seen from Table IV formulation 6, containing polypropylene, low melt index polybutylene and 5% by weight high melt index polybutylene had a significant improvement in haze and clarity over the blends not containing the high melt index polybutylene.

The high melt index butene-1 polymer flows better than the low melt index material creating a film or article with good optical properties. The high melt flow material flows better to the surface of the film creating a higher value of gloss than a low melt index polybutylene. In the bulk of the film during stretching, the high melt index material fills the microvoids better than low melt index polybutylene with improved gloss and reduction of microvoids. The clarity and haze of the blends containing the high melt index material is improved when compared with those containing only the low melt flow polybutylene material.

In terms of processability, the high melt flow material usually acts as a better lubricant than a low melt flow polybutylene and consequently improves the processability of the material into film, thus reducing film breakage when compared with low melt flow polybutylene material.

The present invention also provides laminar structures, wherein a layer of the composition of the invention is disposed on a substrate, such as nylon or polyester or polycarbonate, with or without an additional tie layer adhesive, forming a laminate or laminar structure.

## Claims

1. A composition comprising a blend of (i) at least 40 percent by weight of a propylene polymer, (ii) at least 40 percent by weight of a low melt index polybutene-1 having a melt index (as determined in accordance with ASTM D-1238 Condition E at 190°C) of between 0.5 and 10 g/10 minutes and (iii) 2 to 8 percent by weight of a high melt index polybutene-1 having a melt index (as determined in accordance with ASTM D-1238 Condition E at 190°C) of from 20 to 350 g/10 minutes and a melt viscosity of greater than 20 Pas (20,000 centipoise) at 200°C.

2. A composition according to claim 1 wherein the high melt index polybutene-1 has a melt index of 20 to 300 g/10 minutes.

3. A composition according to claim 2, wherein the melt index is from 100 to 200.

4. A composition according to any one of the preceding claims wherein the polybutene-1 (ii) and/or (iii) is a butene-1 homopolymer or copolymer of butene-1 with 1 to 30 mole% of ethylene, propylene or a C₅ to C₈ alpha olefin.

5. A composition according to any one of the preceding claims wherein the propylene polymer (i) is a propylene homopolymer or a copolymer of propylene with 1-30 mole% of ethylene or a C₄-C₈ alpha olefin.

6. A molded article, film or sheet prepared from a composition as claimed in any one of the preceding claims.

7. A laminate structure comprising a layer prepared from a composition as claimed in any one of claims 1 to 5.

## Patentansprüche

1. Masse, umfassend ein Gemisch aus (i) mindestens 40 Gew.-% eines Propylenpolymers, (ii) mindestens 40 Gew.-% eines Polybutens-1 mit niedrigem Schmelzindex mit einem Schmelzindex (bestimmt nach ASTM D-1238 Bedingung E bei 190°C) zwischen 0,5 und 10 g/10 min und (iii) 2 bis 8 Gew.-% eines Polybutens-1 mit hohem Schmelzindex mit einem Schmelzindex (bestimmt nach ASTM D-1238 Bedingung E bei 190°C) von 20 bis 350 g/10 min und einer Schmelzviskosität > 20 Pa·s (20 000 Centipoise) bei 200°C.

2. Masse nach Anspruch 1, wobei das Polybuten-1 mit hohem Schmelzindex einen Schmelzindex von 20 bis 300 g/10 min besitzt.

3. Masse nach Anspruch 2, wobei der Schmelzindex 100 bis 200 beträgt.

4. Masse nach einem der vorangehenden Ansprüche, wobei das Polybuten-1 (ii) und/oder (iii) ein Buten-1-Homopolymer oder Copolymer aus Buten-1 mit 1 bis 30 mol-% Ethylen, Propylen oder einem C₅- bis C₈-α-Olefin ist.

5. Masse nach einem der vorangehenden Ansprüche, wobei das Propylenpolymer (i) ein Propylenhomopolymer oder ein Copolymer aus Propylen mit 1 bis 30 mol-% Ethylen oder einem C₄- bis C₈-α-Olefin ist.

6. Formkörper, Film oder Folie, hergestellt aus einer Masse nach einem der vorangehenden Ansprüche.

7. Laminatstruktur, umfassend eine Schicht, hergestellt aus einer Masse nach einem der Ansprüche 1 bis 5.

## Revendications

1. Composition comprenant un mélange de (a) au moins 40 % en poids d'un polymère de propylène, (b) au moins 40 % en poids d'un polybutène-1 à bas indice de fluidité à chaud, dont l'indice de fluidité à chaud (déterminé selon la norme ASTM D-1238, Conditions E, à 190°C) vaut entre 0,5 et 10 g/10 minutes, et (c) de 2 à 8 % en poids d'un polybutène-1 à haut indice de fluidité à chaud, dont l'indice de fluidité à chaud (déterminé selon la norme ASTM D-1238, Conditions E, à 190°C) vaut entre 20 et 350 g/10 minutes, et dont la viscosité à l'état fondu est supérieure à 20 Pa.s (20 000 centipoises) à 200°C.

2. Composition conforme à la revendication 1, dans laquelle le polybutène-1 à haut indice de fluidité à chaud présente un indice de fluidité à chaud valant de 20 à 300 g/10 minutes.

3. Composition conforme à la revendication 2, dans laquelle ledit indice de fluidité à chaud vaut de 100 à 200 g/10 minutes.

4. Composition conforme à l'une des revendications précédentes, dans laquelle le polybutène-1 (b) et/ou (c) est un homopolymère du butène-1 ou un copolymère de butène-1 et de 1 à 30 % en moles d'éthylène, de propylène ou d'une alpha-oléfine en C₅₋₈.

5. Composition conforme à l'une des revendications précédentes, dans laquelle le polymère de propylène (a) est un homopolymère du propylène ou un copolymère de propylène et de 1 à 30 % en modes d'éthylène ou d'une alpha-oléfine en C₄₋₈.

6. Article moulé, film ou feuille préparé à partir d'une composition conforme à l'une des revendications précédentes.

7. Structure stratifiée comportant une couche préparée à partir d'une composition conforme à l'une des revendications 1 à 5.
